# FASCICULE DE BREVET EUROPEEN

(11) **EP 0 406 089 B1**
(45) Date de publication et mention de la délivrance du brevet: **24.05.1995**
(21) Numéro de dépôt: 90401802.5
(22) Date de dépôt: 25.06.1990
(51) Int. Cl.: B60N 2/22, F16H 1/32

(54) **Dispositif de rattrapage de jeu pour des articulations dites continues à train épicycloidal et son mode de montage**
Vorrichtung zum Spielausgleich eines kontinuierlichen Gelenkes mit einem Epizykloidalgetriebe und Verfahren zu deren Montage
Arrangement for compensating play in continuous articulations having epicycloidal gears and process for mounting same

(30) Priorité: 30.06.1989 FR 8908812; 22.12.1989 FR 8917113
(43) Date de publication de la demande: 02.01.1991
(73) Titulaire: ETS. COUSIN FRERES, F-61103 Flers Cédex (FR)
(72) Inventeur: Droulon, Georges, F-61100 Flers (FR); Reubeuze, Yann, F-61100 Flers (FR)
(74) Mandataire: Madeuf, Claude Alexandre Jean

(56) Documents cités:
- EP-A- 0 274 331
- FR-A- 2 528 678
- GB-A- 2 073 311
- US-A- 3 562 851

## Description

On utilise de plus en plus soit pour le positionnement d'un dossier de siège de véhicule, soit pour le positionnement de l'assise de ce même siège des mécanismes ou articulations dites continues à train épicycloïdal car le réglage du siège est parfait et également très simple.

Malheureusement, la réalisation pratique de ces articulations nécessite des tolérances de fabrication qui, malgré les soins apportés, provoquent un certain jeu se répercutant d'une manière désagréable soit sur le dossier soit sur l'assise du siège considéré et qui, de ce fait, font l'objet de vives critiques des constructeurs.

On a essayé, par différents moyens, de remédier aux jeux provoqués par les tolérances de fabrication et l'usure des dentures de ces articulations à train épicycloïdal mais les solutions apportées jusqu'à présent sont, en général, coûteuses et ne donnent pas toujours le résultat complet recherché et sont d'un montage délicat rendant pratiquement impossible le montage sur machine automatique de ces articulations, ce qui augmente le prix de revient des sièges, résultat inacceptable pour les constructeurs (voir en particulier le GB-A-2 073 311).

La présente invention tend donc à remédier à cet inconvénient majeur par la création d'une came spéciale supportant le satellite, came qui permet, de par sa conception simple et donc facile à monter, le rattrapage automatique et permanent des jeux des articulations dites continues à train épicycloïdal.

De plus, dans la pratique, il s'est révélé que le montage ne pouvait pas être fait aisément par voie automatique et, de ce fait, la présente invention apporte par la conception de certains organes, un progrès sensible pour le montage automatique de ces articulations et assure donc une diminution du prix de revient dans la fabrication de ces dernières.

On connaît par EP-A-0 274 331 (figures 2 et 6) un dispositif de rattrapage de jeu pour une articulation dite continue à train épicycloïdal comprenant un flasque fixe présentant une denture intérieure et un flasque mobile présentant une denture intérieure et pouvant tourner l'un par rapport à l'autre ; un élément de commande ; une pièce circulaire intermédiaire montée sur ledit élément de commande et concentrique aux dentures desdits flasques fixe et mobile ; une cage pour un roulement entourant ladite pièce circulaire intermédiaire ; un satellite à double denture extérieure monté sur ladite cage, ce satellite coopérant avec les dentures internes desdits flasques fixe et mobile ; la pièce circulaire intermédiaire comprenant un épaulement ainsi qu'une partie centrale disposée dans ladite cage du roulement, une came insérée entre la cage du roulement et ladite pièce circulaire intermédiaire.

Conformément à l'invention, la came est constituée par deux pièces identiques et symétriques formant des demi-cames, l'épaulement de la pièce circulaire intermédiaire présentant la forme d'un doigt, la cage du roulement étant évidée intérieurement pour recevoir la came et comportant une encoche recevant le doigt en permettant de maintenir une excentration minimum, un ressort légèrement sous tension étant placé entre les parties supérieures des demi-cames, le doigt de la pièce circulaire intermédiaire étant disposé entre les parties inférieures desdites demi-cames, les deux flasques fixe et mobile délimitant des paliers, la pièce circulaire intermédiaire étant placée dans lesdits paliers et comprenant un premier prolongement monté dans le palier du flasque fixe et un second prolongement monté dans le palier du flasque mobile, une excentricité suffisante étant prévue entre le diamètre des dentures dudit satellite et ladite pièce circulaire intermédiaire afin de séparer lesdites demi-cames l'une de l'autre à leurs parties supérieures à l'aide dudit ressort et à leurs parties inférieures à l'aide dudit doigt de sorte que, pour surmonter un point dur produit pendant la rotation dudit satellite à double denture extérieure du fait d'une ovalisation des dentures desdits flasques et dudit satellite inhérent à la fabrication, les parties supérieures desdites demicames sont amenées sous l'impulsion du doigt, en contact l'une avec l'autre en bandant ledit ressort de manière ainsi à diminuer l'excentration des dentures du satellite par rapport aux dentures des flasques et permettre le passage dudit point dur et de sorte que, dès que le point dur est passé, le ressort qui a été comprimé ramène lesdites demi-cames dans leurs positions antérieures séparées et ramène également ledit doigt dans sa position antérieure entre les parties inférieures des demi-cames.

L'invention s'étend également à un procédé pour réaliser le dispositif ci-dessus dans lequel, afin d'obtenir une excentration minimum de la cage par rapport auxdits prolongements de la pièce circulaire intermédiaire, on monte de manière automatique dans un poste annexe un ensemble de pièces composé des deux demi-cames, du ressort, de la cage et de la pièce circulaire intermédiaire, après quoi l'ensemble des pièces ci-dessus est disposé dans le flasque mobile, puis on place le satellite et le roulement dans le flasque mobile, ce qui donne ainsi, dans cette position, du jeu au satellite dans la denture du flasque mobile, le flasque fixe étant ensuite placé et centré par la partie centrale de la pièce circulaire intermédiaire, un mécanisme automatique venant ensuite pousser ladite pièce circulaire intermédiaire pour que, sous l'action de la détente du ressort, il se produise une augmentation de l'excentration jusqu'à une valeur choisie pour obtenir une pénétration des dentures du satellite dans les dentures des flasques fixe et mobile en permettant ainsi un fonctionnement correct du dispositif.

Diverses autres caractéristiques de l'invention ressortent d'ailleurs de la description détaillée qui suit.

Une forme de réalisation de l'objet de l'invention est représentée, à titre d'exemple non limitatif, aux dessins annexés.

La fig. 1 est une vue de face partie arrachée d'une articulation dite continue à train épicycloïdal munie du dispositif de rattrapage de jeu.

La fig. 2 est une coupe diamétrale suivant la ligne II-II de la fig. 1.

La fig. 3 est un schéma partiel à grande échelle montrant, dans l'articulation à train épicycloïdal, le dispositif de rattrapage de jeu en cours de fonctionnement.

La fig. 3a est une vue à très grande échelle montrant la partie des dentures comprise dans le cercle de la fig. 3.

La fig. 4 est un schéma partiel montrant la partie centrale de l'articulation à train épicycloïdal avec le dispositif de rattrapage de jeu dans une autre position.

La fig. 4a est une vue à très grande échelle montrant la partie des dentures comprise dans le cercle de la fig. 4.

La fig. 5 est une coupe diamétrale de l'articulation en cours de montage.

La fig. 5a est une vue en plan partiel de la partie centrale de l'articulation montrant le satellite, la came composite, le ressort placé à l'une des extrémités de la came composite, la pièce intermédiaire et le doigt de commande de la came composite.

La fig. 5b montre l'autre côté de la partie centrale du mécanisme c'est-à-dire le satellite, la came composite, le ressort, la pièce centrale intermédiaire et son doigt de commande.

La fig. 6 est une coupe-élévation diamétrale correspondant à la fig. 5 mais montrant le mécanisme en position de fonctionnement normal, la pièce centrale intermédiaire étant en place dans les flasques fixe et mobile.

Les fig. 6a et 6b correspondent aux fig. 5a et 5b mais la pièce centrale intermédiaire étant repoussée en position définitive.

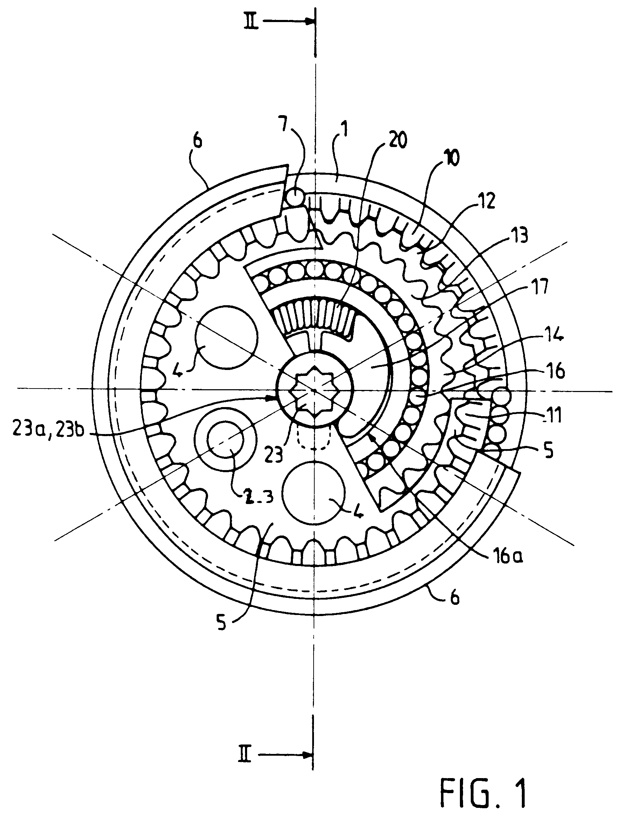

Comme on peut s'en rendre compte à la fig. 1, l'articulation à train épicycloïdal dite continue se compose principalement d'un flasque fixe 1 portant, d'une manière connue en soi, extérieurement, les organes de fixation 2, 3 qui sont au nombre de trois normalement répartis à 120° les uns des autres avec, en position intermédiaire, des pions 4 de centrage, ce qui fait que ces pions 4 sont disposés à 120° les uns des autres et à 60° des organes de fixation 2, 3.

Le flasque mobile 5 comporte également les organes de fixation 2, 3 et les pions 4 qui sont répartis suivant un cercle de diamètre légèrement inférieur au diamètre déterminé par les organes de fixation 2, 3 et les pions 4 du flasque fixe 1.

Finalement, le flasque mobile 5 est retenu sur le flasque fixe 1 par une bague sertie 6 et un roulement à billes 7 est interposé entre la bague sertie 6 et le pourtour extérieur du flasque mobile 5 pour faciliter la rotation de ce dernier par rapport au flasque fixe 1 et à la bague 6.

Il est à noter et, ce, d'une manière connue que le flasque mobile 5 est centré dans le flasque fixe 1 au moyen d'une gorge circulaire 8 prévue à cet effet sur la périphérie intérieure libre du flasque fixe 1. Bien entendu, et comme cela est bien visible à la fig. 1, le flasque fixe 1 comporte intérieurement une denture périphérique intérieure 10 tandis que le flasque mobile 5 présente une denture intérieure 11.

Les dentures 10 et 11 soit n'ont pas le même diamètre ou soit, dans le cas présent, ont un module différent mais, dans certains cas, le module peut être identique mais le nombre de dents différent d'au moins une dent entre la denture 1O et la denture 11.

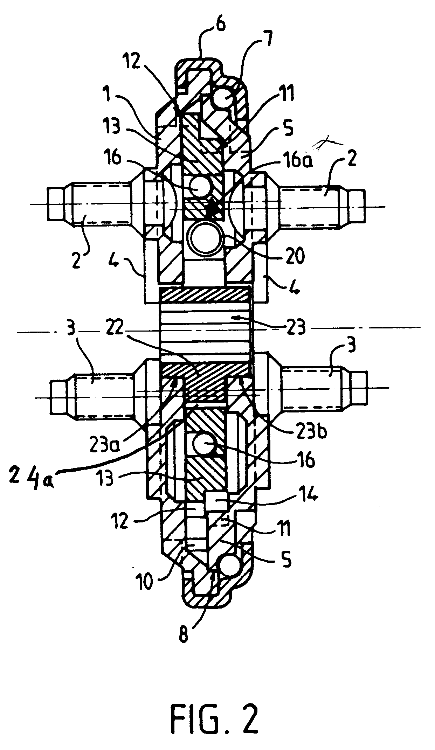

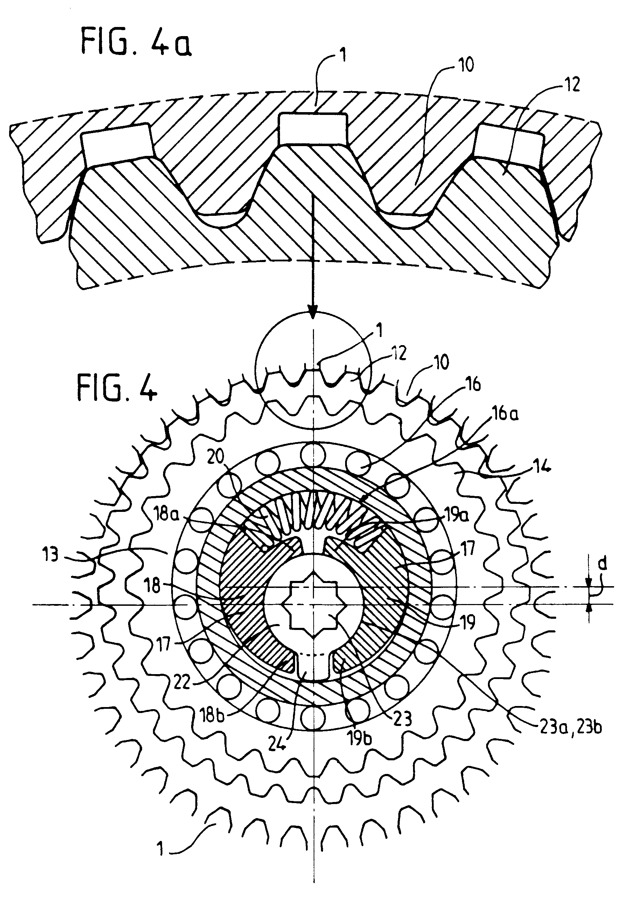

Comme cela est bien visible aux fig. 1 et 2, la denture fixe 10 engrène avec l'une des dentures 12 d'un satellite 13 à double denture extérieure, ci-après appelée satellite double, tandis que la denture 14 du satellite double 13 engrène avec la denture 11 du flasque mobile 5. Ce satellite double 13 est monté sur un roulement à billes 16 qui peut être un roulement à billes à cage. Ce dernier roulement à billes sert de palier au satellite double 13 et, dans le cas présent, la cage 16a est évidée intérieurement pour recevoir une came composite 17 constituée par deux demi-cames 18, 19 présentant, à leur partie supérieure, chacune un dégagement 18a, 19a destiné à contenir un ressort 20 (voir fig. 1, 2, 3 et 4). Ce ressort repousse donc normalement les pièces 18, 19 formant cames dans la position représentée à la fig. 4. Il y a lieu de remarquer que la came composite 17 est montée sur une pièce circulaire intermédiaire 22 centrée dans les paliers 23a, 23b réalisés dans les flasques 1 et 5.

Dans le cas présent, la pièce circulaire intermédiaire 22 reçoit une barre de commande ou dispositif motorisé passant dans le trou polygonal 23.

Finalement, la pièce intermédiaire 22 présente sur son pourtour un doigt 24 qui est placé entre les extrémités terminales 18b, 19b des demi-cames 18, 19 formant la came composite 17.

Comme on le voit à la fig. 2, le doigt 24 est monté de façon à pénétrer dans une encoche 24a prévue dans la cage 16a.

Dans le cas de la fig. 4, le doigt 24 n'est normalement pas en contact avec les pièces 18, 19.

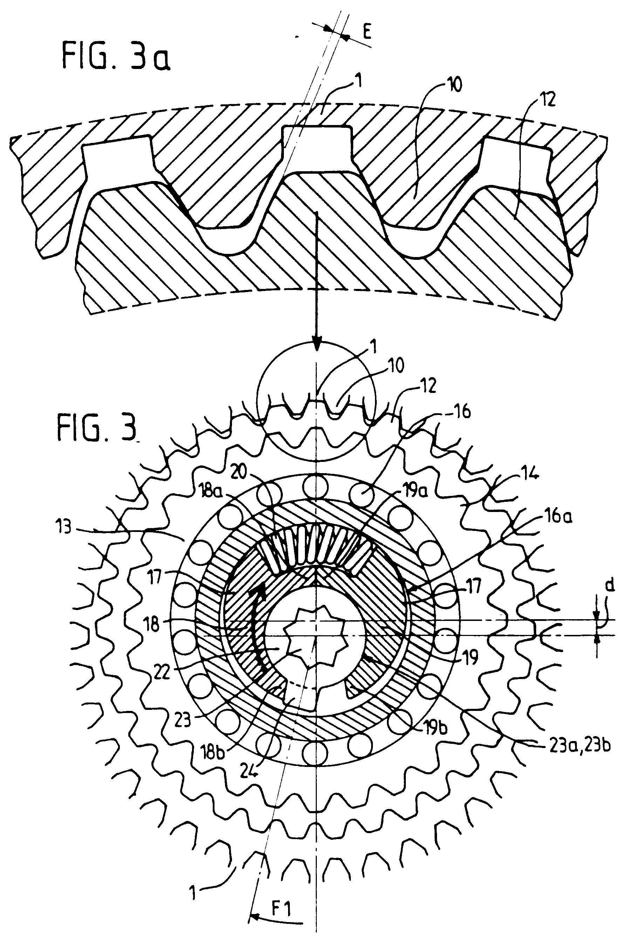

Comme on peut s'en rendre compte en particulier aux fig. 3 et 4, la commande passant dans le trou 23 créant le mouvement de rotation soit à l'aide du bouton de manoeuvre monté à l'une de ses extrémités, soit à l'aide d'un moteur pneumatique, électrique ou autre est excentrée d'une distance d (voir fig. 3 et 4) par rapport à l'axe des dentures du satellite double 13.

La réalisation des pièces de l'articulation à train épicycloïdal dite continue engendre obligatoirement au cours de la fabrication des ovalisations du satellite double et des flasques et, de ce fait, lors de l'entraînement de la commande 23, il se produit obligatoirement des points durs (voir fig. 4a).

Lorsqu'au cours de l'entraînement de l'arbre 23 qui crée, du fait de l'excentration de la came composite 17, une rotation du satellite double 13 par rapport aux dentures intérieures 10, 11 des flasques fixe et mobile 1, 5 on arrive rapidement à un point dur, ce qui fait que la rotation de la pièce intermédiaire 22 continuant le doigt 24 se déplace vers la gauche (flèche f₁, fig. 3) pousse la pièce 18 jusqu'au moment où à l'encontre du ressort 20 l'extrémité terminale haute ou talon 18a de la pièce 18 rencontre la partie terminale haute ou talon 19a de la pièce 19 provoquant ainsi une légère modification de l'excentration primaire qui est amenuisée, ce qui fait apparaître, par recul du satellite double 13, un dégagement des dentures (côté E, voir fig. 3) des flasques fixe et mobile 10 et 11 et donc le passage du point dur considéré qui, dès la pression diminuée, provoque sous l'impulsion du ressort 20 qui se débande légèrement la remise en place des deux pièces 18, 19 constituant la came composite 17 qui reprend la place représentée aux fig. 4 et 4a.

Le doigt 24 est de nouveau centré et le ressort 20 est légèrement décomprimé. Ce mouvement provoque également le retour à l'excentration normale c'est-à-dire à la position représentée à la fig. 4.

On a ainsi compensé tous les jeux provoqués par les tolérances de fabrication et même l'usure des dentures aussi bien des dentures des flasques que les dentures du satellite double et, de ce fait, la rotation continue de l'articulation à train épicycloïdal peut se faire sans jeu transmissible soit au dossier soit aux organes de rehausse de l'assise du siège considéré suivant que ces articulations sont utilisées sur le dossier ou sur l'assise.

Ce dispositif étant simple à réaliser et d'un montage aisé peut donc être fabriqué en grande série sans emploi de fabrication spéciale ni traitement de surface en réduisant ainsi le coût de fabrication de ces articulations à train épicycloïdal dite continues.

Dans le cas présent mais sans limitation particulière, il a été décrit un dispositif à excentration de 2,5, ce qui correspond à une surexcentration théorique de 2,29 des dentures du satellite et au moment d'un point dur cette excentration peut être ramenée à 2,25 pour le dégagement des dentures du satellite double 13 de l'emprise des dentures 10 et 11 des flasques 1, 5. Dans certains cas, ces valeurs peuvent être modifiées suivant, d'une part, le diamètre propre des articulations et, d'autre part, du but recherché.

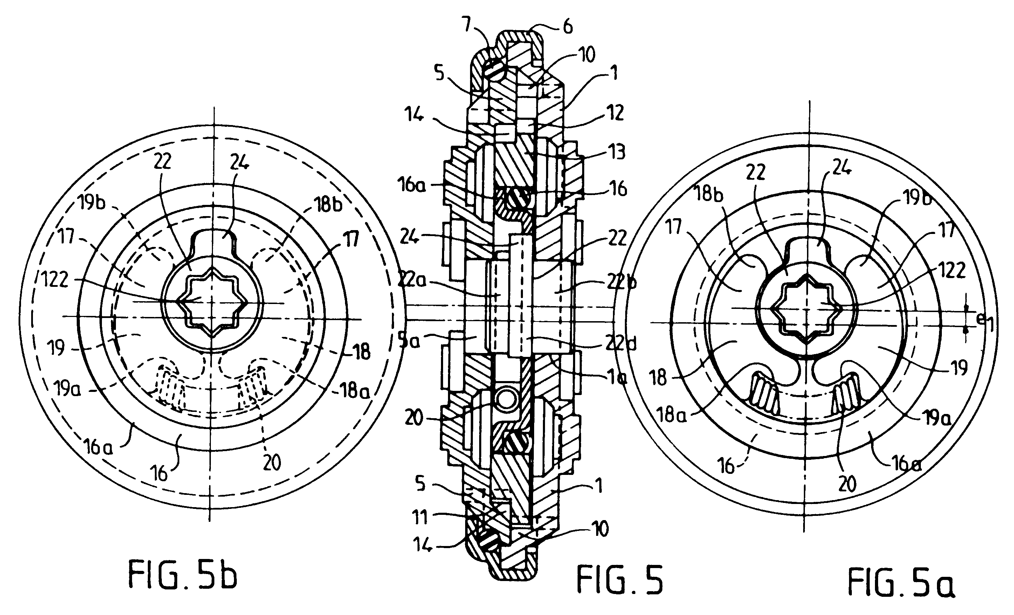

Comme on peut le voir à la fig. 5, le mécanisme d'articulation est identique à celui décrit aux fig. 1 à 4a et présente donc un flasque fixe 1 destiné à être monté sur l'armature d'une assise de siège et un flasque mobile 5 destiné à être monté sur l'armature du dossier de ce même siège. Les flasques fixe 1 et mobile 5 sont maintenus l'un contre l'autre par une bague sertie 6 formant intérieurement un chemin de roulement à billes 7.

Le satellite double 13 comporte une denture 12 engrénant avec la denture 10 du flasque fixe 1 tandis que la denture 14 du satellite 13 engrène avec la denture 11 du flasque mobile 5. Le satellite double 13 est monté sur un roulement à billes 16 dont la cage 16a est centrée contre la face intérieure du flasque fixe 1.

Comme on peut le voir sur les dessins, la came 17, dite came composite, est constituée par deux demi-cames 18, 19 présentant, à leur partie inférieure, chacune un dégagement 18a, 19a destiné à contenir un ressort 20 tendant à les repousser l'un vers l'autre.

Finalement, une pièce circulaire intermédiaire 22 qui sera décrite plus loin peut être engagée dans les parties centrales évidées 5a du flasque mobile 5 et la du flasque fixe 1.

Cette pièce circulaire intermédiaire présente en son centre un canal 122 qui est en étoile à huit branches pour recevoir une barre de commande du dispositif d'articulation, cette commande pouvant être manuelle ou motorisée.

Finalement, la pièce intermédiaire 22 présente sur son pourtour un doigt 24 qui est engagé entre les extrémités terminales 18b, 19b des demi-cames 18, 19 formant la came composite 17.

La pièce circulaire intermédiaire 22 se compose d'une partie centrale 22d circulaire, portant le doigt 24, qui est prolongé sur le côté du flasque fixe 1 par un élément cylindrique 22b de grande longueur et sur le côté du flasque mobile 5 par une partie cylindrique 22a plus courte.

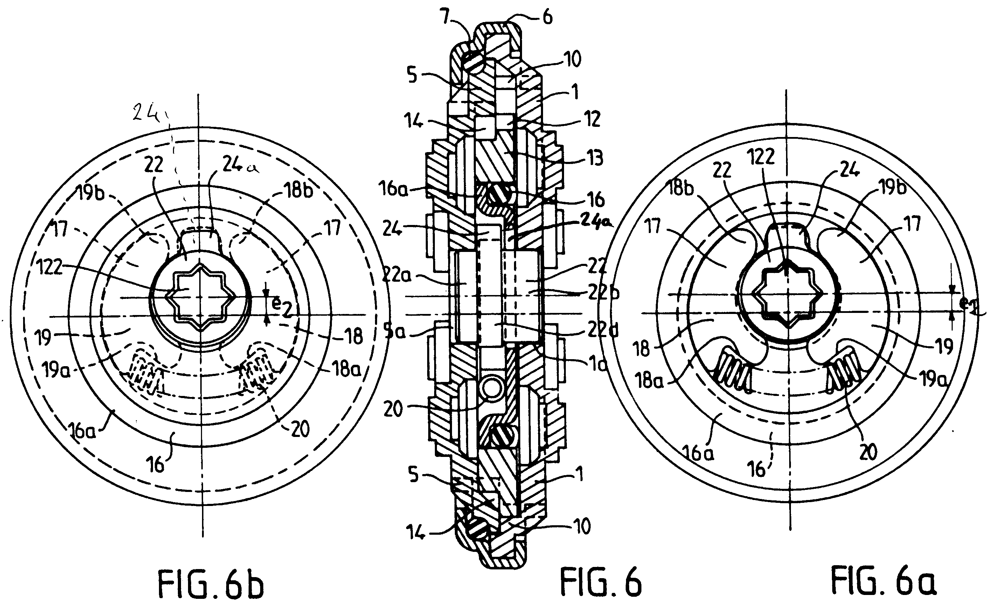

Comme on le voit au dessin , le doigt 24 est monté de façon à pénétrer dans une encoche 24a (fig. 6) prévue dans la cage 16a.

Lors de la mise en place par une machine automatique, l'ensemble des pièces : demi-cames 18, 19 formant la came 17, ressort 20, pièce circulaire intermédiaire 22, satellite double 13, cage à billes 16a, billes 16, est monté directement dans le flasque mobile 5 puis recouvert par le flasque fixe 1 avant sertissage de la bague 6 contenant les billes du roulement à billes 7.

Les pièces occupent alors la position représentée à la fig. 5, c'est-à-dire que le satellite double 13 repose dans la partie centrale du logement constitué par les faces intérieures des flasques fixe 1 et mobile 5 et que le ressort 20 est comprimé puisque les demi-cames 18, 19 sont en position basse et éloignées du doigt 24. L'excentration e₁ (voir fig. 5a) est minimum et donc les dentures 12 et 14 du satellite double 13 sont à peine en prise avec les dentures 10 et 11 des flasques fixe 1 et mobile 5 mais à ce moment la pièce intermédiaire 22 n'est pas en position de travail mais dans l'encoche 24a (voir fig. 5), ce qui permet de mettre aisément en place les pièces automatiquement.

Lorsque la bague de sertissage 6 est en place, il suffit alors de repousser la pièce circulaire intermédiaire 22 vers le flasque mobile 5 (voir fig. 6) pour que la pièce circulaire intermédiaire 22 occupe sa position normale en mettant alors en place, par le déplacement de la partie centrale 22d de la pièce circulaire intermédiaire 22, les demi-cames 18, 19 formant la came 17 (voir position de ces demi-cames à la fig. 6), ce qui provoque la décompression du ressort 20 et, de ce fait, le satellite double 13 est mis en place correctement, ses dentures 12, 14 pénétrant dans les dentures 10, 11 internes des flasques fixe 1 et mobile 5 (voir fig. 6).

Le mécanisme est alors en position parfaite de fonctionnement et l'excentration e₁ (voir fig. 6) est supérieure à e₂ comme cela a été expliqué pour les fig. 1 à 4a.

En général, et à titre d'exemple, l'excentration e₂ est égale à 2,29 tandis que l'excentration e₁ est égale à 2,50.

De telles articulations à train épicycloïdal dites continues assurent aux passagers des sièges un confort maximum sans sensation désagréable de jeux aussi bien sur l'assise que sur le dossier et également la fabrication et la réalisation définitives de ces articulations qui sont très résistantes et permettent donc une absorption des forces considérable sans destruction de l'articulation puisqu'une partie des forces créées par exemple au moment d'un choc peut être absorbée par les dentures et le ressort 20 et les pièces 18, 19.

## Revendications

1. Dispositif de rattrapage de jeu pour une articulation dite continue à train épicycloïdal comprenant un flasque fixe (1) présentant une denture intérieure (10) et un flasque mobile (5) présentant une denture intérieure (11) et pouvant tourner l'un par rapport à l'autre ; un élément de commande (23) ; une pièce circulaire intermédiaire (22) montée sur ledit élément de commande et concentrique aux dentures desdits flasques fixe et mobile ; une cage (16a) pour un roulement (16) entourant ladite pièce circulaire intermédiaire (22) ; un satellite (13) à double denture extérieure (12 et 14) monté sur ladite cage (16a), ce satellite coopérant avec les dentures internes (10, 11) desdits flasques fixe et mobile (1, 5) ; la pièce circulaire intermédiaire (22) comprenant un épaulement (24) ainsi qu'une partie centrale (22d) disposée dans ladite cage (16a) du roulement (16), une came insérée entre la cage (16a) du roulement (16) et ladite pièce circulaire intermédiaire (22), caractérisé en ce que la came (17) est constituée par deux pièces identiques et symétriques (18, 19) formant des demi-cames, l'épaulement de la pièce circulaire intermédiaire présentant la forme d'un doigt (24), la cage (16a) du roulement (16) étant évidée intérieurement pour recevoir la came (17) et comportant une encoche (24a) recevant le doigt (24) en permettant de maintenir une excentration minimum, un ressort (20) légèrement sous tension étant placé entre les parties supérieures des demi-cames (18, 19), le doigt (24) de la pièce circulaire intermédiaire étant disposé entre les parties inférieures desdites demi-cames, les deux flasques fixe (1) et mobile (5) délimitant des paliers (23a, 23b), la pièce circulaire intermédiaire (22) étant placée dans lesdits paliers et comprenant un premier prolongement (22a) monté dans le palier (23a) du flasque fixe (1) et un second prolongement (22b) monté dans le palier (23b) du flasque mobile (5), une excentricité suffisante étant prévue entre le diamètre des dentures dudit satellite (13) et ladite pièce circulaire intermédiaire (22) afin de séparer lesdites demi-cames l'une de l'autre à leurs parties supérieures à l'aide dudit ressort et à leurs parties inférieures à l'aide dudit doigt de sorte que, pour surmonter un point dur produit pendant la rotation dudit satellite à double denture extérieure du fait d'une ovalisation des dentures desdits flasques et dudit satellite inhérent à la fabrication, les parties supérieures desdites demi-cames sont amenées, sous l'impulsion du doigt (24), en contact l'une avec l'autre en bandant ledit ressort (20) de manière ainsi à diminuer l'excentration des dentures du satellite par rapport aux dentures des flasques et permettre le passage dudit point dur et de sorte que, dès que le point dur est passé, le ressort (20) qui a été comprimé ramène lesdites demi-cames (18, 19) dans leurs positions antérieures séparées et ramène également ledit doigt (24) dans sa position antérieure entre les parties inférieures des demi-cames (18, 19).

2. Dispositif selon la revendication 1, caractérisé en ce que les parties supérieures desdites demi-cames (18, 19) présentent des logements correspondants pour la mise en place du ressort (20).

3. Dispositif selon la revendication 1 ou 2, caractérisé en ce que la pièce circulaire intermédiaire (22) présente un trou de section polygonale pour recevoir ledit élément de commande (23) sous la forme d'une barre de commande ou d'un moyen motorisé.

4. Dispositif selon l'une des revendications 1 à 3, caractérisé en ce que le roulement (16) est constitué par des billes interposées entre le satellite (13) et la cage (16a).

5. Dispositif selon l'une des revendications 1 à 4, caractérisé en ce que le prolongement le plus court (22a) de la pièce circulaire intermédiaire (22) est logé dans le flasque mobile (5) tandis que le prolongement le plus long (22b) de cette pièce est logé dans le flasque fixe (1).

6. Procédé pour réaliser un dispositif selon l'une des revendications 1 à 5, dans lequel, afin d'obtenir une excentration minimum de la cage (16a) par rapport auxdits prolongements (22a, 22b) de la pièce circulaire intermédiaire (22), on monte de manière automatique dans un poste annexe un ensemble de pièces composé des deux demi-cames (18, 19), du ressort (20), de la cage (16a) et de la pièce circulaire intermédiaire (22), après quoi l'ensemble des pièces ci-dessus est disposé dans le flasque mobile (5), puis on place le satellite (13) et le roulement (16) dans le flasque mobile (5), ce qui donne ainsi, dans cette position, du jeu au satellite (13) dans la denture (11) du flasque mobile (5), le flasque fixe (1) étant ensuite placé et centré par la partie centrale (22d) de la pièce circulaire intermédiaire (22), un mécanisme automatique venant ensuite pousser ladite pièce circulaire intermédiaire (22) pour que, sous l'action de la détente du ressort (20), il se produise une augmentation de l'excentration jusqu'à une valeur choisie pour obtenir une pénétration des dentures du satellite (13) dans les dentures des flasques fixe et mobile (1, 5) en permettant ainsi un fonctionnement correct du dispositif.

## Claims

1. Play compensating device for a so-called continuous epicycloidal train articulation comprising a fixed flange (1) having an inner toothing (10) and a mobile flange (5) having an inner toothing (11) and being able to rotate one with respect to the other ; a control member (23) ; an intermediate circular part (22) mounted on said control member and concentrical to the toothings of said fixed and mobile flanges ; a cage (16a) for a ball bearing 16 surrounding said intermediate circular part (22) ; a satellite (13) with double outer toothings (12 and 14) mounted on said cage (16a), this satellite cooperating with the inner toothings (10, 11) of said fixed and mobile flange (1, 5) ; the intermediate circular part (22) comprising a shoulder (24) as well as a central portion (22d) arranged in said cage (16a) of the ball bearing (16), a cam inserted between the cage (16a) of the ball bearing (16) and said intermediate circular part (22), characterized in that the cam (17) is formed by two identical and simmetrical parts (18, 19) as half-cams, the shoulder of the intermediate circular part having the shape of a finger (24), the cage (16a) of the ball bearing being innerly recessed for receiving the cam (17) and comprising a notch (24a) receiving the finger (24) by enabling to maintain a minimum eccentricity, a spring that is slightly under tension being placed between the upper portions of the half-cams (18, 19), the finger (24) of the intermediate circular part being positioned between the lower portions of said half-cams, the two fixed (1) and mobile (5) flanges forming bearings (23a, 23b), the intermediate circular part (22) being positioned in said bearings and comprising a first extension (22a) mounted in the bearing (23a) of the fixed flange (1) and a second extension (22b) mounted in the bearing (23b) of the mobile flange (5), a sufficient eccentricity being provided between the diameter of the toothings of said satellite (13) and said intermediate circular part (22) in order to separate said half-cams one from the other at their upper portions by means of said spring and at their lower portions by means of said finger whereby, to overcome a hard point that is produced during rotation of said double outer toothing satellite due to an ovaling of the toothings of said flanges and said satellite inherent to the manufacture thereof, the upper portions of said half-cams are brought, under impulse of the finger (24), into contact with one an other by compressing said spring (20) to thereby decrease the eccentricity of the toothings of the satellite relative to the toothings of the flanges and provide passage over said hard point and whereby, as soon as the hard point is passed, the spring (20) that has been compressed, returns said half-cams (18, 19) to their prior separated position and returns also said finger (24) to its prior position between the lower portions of the half-cams (18, 19).

2. Device according to claim 1, characterized in that the upper portions of said half-cams (18, 19) are provided with corresponding recesses for the positionning of the spring 20.

3. Device according to claim 1 or 2, characterized in that the intermediate circular part (22) has a hole of a polygonal cross section for receiving said control member (23) under the shape of a control bar or a motirized means.

4. Device according to one of claims 1 to 3, characterized in that the roll bearing (16) is formed by balls interposed between the satellite (13) and the cage (16a).

5. Device according to one of claims 1 to 4, characterized in that the shorter extension (22a) of the intermediate circular part (22) is housed in the mobile flange (5) while the longer extension (22b) of this part is housed in the fixed flange (1).

6. Method for making a device according to one of claims 1 to 5, in which, in order to obtain a minimum eccentricity of the cage (16a) relative to said extensions (22a, 22b) of the intermediate circular part (22), an automatic mounting in a detached station of an assembly of parts made of the two half-cams (18, 19), the spring (20), the cage (16a) and the intermediate circular part (22), is effected, whereupon the afore mentioned assembly of parts is placed in the mobile flange (5), then the satellite (13) and the roll bearing (16) are placed in the mobile flange (5), which thus provides, in this position, some play to the satellite (13) in the toothings (11) of the mobile flange (5), the fixed flange (1) being then placed and centered by the central portion (22d) of the intermediate circular part (22), an automatic mechanism pushing then said intermediate circular part (22) so that, under the release of the spring (20), an increase of the eccentricity is caused up to the chosen value for obtaining a penetration of the toothings of the satellite (13) in the toothings of the fixed and mobile flanges (1, 5), thus affording a correct operation of the device.

## Patentansprüche

1. Vorrichtung zum Nachregulieren des Spiels eines kontinuierlichen Gelenks mit einem Epizykloidgetriebe, bestehend aus einem festen Flansch (1) mit einer Innenverzahnung (10) und einem beweglichen Flansch (5) mit einer Innenverzahlung (11), die zueinander verdreht werden können; einem Steuerteil (23); einem kreisförmigen Zwischenstück (22), das auf dem Steuerteil (23) montiert und konzentrisch zu den Verzahnungen des festen Flansches und des beweglichen Flansches angeordnet ist; einem Gehäuse (16a) für ein Lager (16), das das kreisförmige Zwischenstück (22) umschließt; und einem Planetenrad (19) mit doppelter Außenverzahnung (12 und 14), das auf dem Gehäuse (16a) gelagert ist und mit den Innenverzahnungen (10, 11) des festen Flansches (1) und des beweglichen Flansches (5) zusammenwirkt; wobei das kreisförmige Zwischenstück (22) eine Schulter (24) ebenso wie einen Mittelteil (22d) aufweist, der in dem Gehäuse (16a) des Lagers (16) angeordnet ist, und ein Nocken zwischen dem Gehäuse (16a) des Lagers (16) und dem kreisförmigen Zwischenstück (22) eingefügt ist, **dadurch gekennzeichnet,** daß der Nocken (17) aus zwei identischen und symmetrischen Teilen (18, 19) besteht, die Halbnocken bilden, die Schulter des kreisförmigen Zwischenstücks die Form eines Fingers (24) hat, das Gehäuse (16a) des Lagers (16) eine innere Höhlung aufweist, um den Nocken (17) aufzunehmen, und mit einem Einschnitt (24a) versehen ist, der den Finger (24) aufnimmt, was die Einhaltung eines Minimums an Exzentrizität erlaubt, eine leicht gespannte Feder (20) zwischen den oberen Enden der Halbnocken (18, 19) angeordnet ist, der Finger (24) des kreisförmigen Zwischenstücks zwischen den unteren Enden der Halbnocken angeordnet ist, der feste Flansch (1) und der bewegliche Flansch (5) Lager (23a, 23b) begrenzen, das kreisförmige Zwischenstück (22) in diesen Lagern angeordnet ist und eine erste Verlängerung (22a) im Lager (23a) des festen Flansches (1) und eine zweite Verlängerung (22b) im Lager (23b) des beweglichen Flansches (5) aufweist, und eine ausreichende Exzentrizität zwischen dem Durchmesser der Verzahnungen des Planetenrades (23) und dem kreisförmigen Zwischenstück (22) vorgesehen ist, um die Halbnocken an ihren oberen Enden mit Hilfe der Feder und an ihren unteren Enden mit Hilfe des Fingers auseinander zu spreizen, um einen schwergängigen Punkt zu überwinden, der sich während der Drehung des Planetenrades mit der doppelten Außenverzahnung infolge einer Unrundheit der Verzahnungen der Flansche und des Planetenrades aufgrund der Herstellung ergibt, wobei die oberen Enden der Halbnocken unter der Einwirkung des Fingers (24) miteinander in Berührung gebracht sind und die Feder (20) derart gespannt ist, daß folglich die Exzentrizität der Verzahnungen des Planetenrades gegenüber den Verzahnungen der Flansche herabgesetzt ist und der Durchgang am schwergängigen Punkt derart ermöglicht ist, daß zugleich der schwergängige Punkt passiert wird, wobei die zunächst gespannte Feder (20) die Halbnocken (18, 19) in ihre früheren gespreizten Stellungen und ebenfalls den Finger (24) in seine frühere Stellung zwischen den unteren Enden der Halbnocken (18, 19) zurückführt.

2. Vorrichtung nach Anspruch 1, **dadurch gekennzeichnet,** daß die oberen Enden der Halbnocken (18, 19) entsprechende Lagerausnehmungen zum Einbau der Feder (20) aufweisen.

3. Vorrichtung nach Anspruch 1 oder 2, **dadurch gekennzeichnet,** daß das kreisförmige Zwischenstück (22) ein Loch von polygonalem Querschnitt aufweist, um das Steuerelement (23) in Form einer Steuerwelle oder eines motorgetriebenen Mittels aufzunehmen.

4. Vorrichtung nach einem der Ansprüche 1 bis 3, **dadurch gekennzeichnet,** daß das Lager (16) von Kugeln gebildet ist, die zwischen dem Planetenrad 13 und dem Gehäuse (16a) eingefügt sind.

5. Vorrichtung nach einem der Ansprüche 1 bis 4, **dadurch gekennzeichnet,** daß die kürzere Verlängerung (22a) des kreisförmigen Zwischenstücks (22) in dem beweglichen Flansch (5) angeordnet ist, während die längere Verlängerung (22b) des Zwischenstücks im festen Flansch (1) angeordnet ist.

6. Verfahren zum Herstellen der Vorrichtung nach einem der Ansprüche 1 bis 5, bei dem zur Erzielung eines Minimums an Exzentrizität des Gehäuses (16a) gegenüber den Verlängerungen (22a, 22b) des kreisförmigen Zwischenstücks (22) in automatischer Weise in einem Nebenstand eine Anordnung von Teilen montiert wird, die aus den zwei Halbnocken (18, 19), der Feder (20), dem Gehäuse (16a) und dem kreisförmigen Zwischenstück (22) besteht, worauf die Anordnung aus den vorgenannten Teilen im beweglichen Flansch (5) angeordnet wird, dann das Planetenrad (13) und das Lager (16) im beweglichen Flansch (5) plaziert werden, was in dieser Stellung also dem Planetenrad (23) in der Verzahnung (11) des beweglichen Flansches (5) Spiel gibt, und dann der feste Flansch (1) plaziert und gegenüber dem Mittelteil (22d) des kreisförmigen Zwischenstücks (22) zentriert wird, worauf eine automatische Einrichtung zur Schubeinwirkung auf das kreisförmige Zwischenstück (22) gebracht wird, damit sich bei gleichzeitiger Entspannung der Feder (20) eine größere Exzentrizität bis zu einem vorgewählten Wert ergibt, um ein Eindringen der Verzahnungen des Planetenrades (13) in die Verzahnungen des festen Flansches (1) und des beweglichen Flansches (5) zu erzielen und dadurch also eine korrekte Wirkungsweise der Vorrichtung zu erzielen.
